# EUROPÄISCHE PATENTSCHRIFT

(11) **EP 0 926 297 B1**
(45) Veröffentlichungstag und Bekanntmachung des Hinweises auf die Patenterteilung: **23.04.2003**
(21) Anmeldenummer: 98122428.0
(22) Anmeldetag: 26.11.1998
(51) Int. Cl.: D21G 1/00, D21G 1/02

(54) **Papierkalender**
Paper calender
Calandre pour papier

(30) Priorität: 23.12.1997 DE 19757474
(43) Veröffentlichungstag der Anmeldung: 30.06.1999
(73) Patentinhaber: Voith Paper Patent GmbH, 89522 Heidenheim (DE)
(72) Erfinder: van Haag, Rolf Dr.-Ing., 47647 Kerken (DE)
(74) Vertreter: Knoblauch, Andreas, Dr.-Ing.

(56) Entgegenhaltungen:
- WO-A-97/41298
- DE-A- 4 026 774
- FR-A- 2 407 292

## Beschreibung

Die Erfindung bezieht sich auf einen Papierkalander nach dem Oberbegriff der Ansprüche 1, 2, 5 und 6.

Ein solcher Kalander ist aus DE 195 06 300 A1 bekannt. Kalander dieser Art besitzen einen oder mehrere Walzenspalte, die auf der einen Seite durch eine beheizbare und gut wärmeleitende Hartgußwalze und auf der anderen Seite durch eine einen elastischen Belag tragende Walze begrenzt wird. Mit Hilfe der Heizvorrichtung wird ein Teil der Verformungsenergie als Wärme zugeführt, so daß in vielen Fällen die mechanische Verformungsenergie, die sich als Druckspannung im Walzenspalt auswirkt, vermindert werden kann. Außerdem wirkt die Wärme in Verbindung mit der glatten Oberfläche der Hartgußwalze derart zusammen, daß die Oberfläche der Papierbahn hinsichtlich ihrer Eigenschaften, wie Glanz, Glätte o.dgl., verbessert wird.

Aus DE 27 48 123 A1 ist es bekannt, die unerwünschte, durch Walkarbeit in einem elastischen Belag entstehende Wärme dadurch abzuführen, daß in den Kunststoff feine Metallpartikel zur Verbesserung der Wärmeleitfähigkeit eingebettet werden.

Der Erfindung liegt die Aufgabe zugrunde, einen Papierkalander der eingangs beschriebenen Art anzugeben, der neuartige Kombinationen bei den Kalanderwalzen ermöglicht.

Diese Aufgabe wird erfindungsgemäß durch die Merkmale der Ansprüche 1, 2, 5 oder 6 gelöst.

Hierbei wird einer Walze, deren elastischer Belag zwecks Vermeidung einer Schwarzsatinage für eine gleichmäßige Verdichtung der Papierbahn sorgen soll, gleichzeitig zur Aufbringung von Wärmeenergie benutzt. Der Konstrukteur ist in der Wahl der Gegenwalze weitgehend frei. Er kann dort ebenfalls eine Beheizung vorsehen oder aber eine Walze verwenden, deren Beheizung Schwierigkeiten macht, wie dies bei einer Biegeeinstellwalze mit Hartgußmantel der Fall ist. Die Temperatur wirkt hauptsächlich auf derjenigen Oberfläche der Papierbahn, welche dem Belag zugewandt ist, was dazu ausgenutzt werden kann, daß die Kräfte, welche in der Papierbahn für eine gleichmäßige Verdichtung sorgen, an der Oberfläche zu erwünschten Veredelungseffekten führen.

Die den elastischen Belag bildenden Kunststoffe stehen in dem Ruf, schlechte Wärmeleiter zu sein. Wenn daher nicht ein Kunststoff mit guter Wärmeleitfähigkeit verwendet wird, sind Zusatzmaßnahmen zu treffen, die den Kunststoff für die Wärmeabgabe an die Papierbahn geeignet machen.

Daher beheizt die Heizvorrichtung den elastischen Belag von innen her und der Belag enthält Einlagerungen aus gut wärmeleitendem Material, beispielsweise Partikel, Fasern oder Fäden, insbesondere aus Metall, aber auch aus Kohle oder dergleichen. Durch einen solchen Belag vermag die Wärme gut von innen nach außen zu treten. Besonders günstig sind solche Einlagerungen, die eine Komponente in radialer Richtung haben.

Eine andere günstige Alternative bieten die Merkmale des Anspruchs 2. Hier hat der elastische Belag eine Dicke von 0,05 bis 2 mm. Insbesondere hat der elastische Belag eine Dicke von 0,1 bis 1 mm . Bei einem solchen Belag ist die Isolationswirkung nur noch sehr gering. Die Wärme wird daher gut auf die Papierbahn weitergeleitet. Überraschenderweise genügt eine dünne Belagschicht, weil deren Elastizität in Verbindung mit der Elastizität des Papiers ausreicht, um die Verdichtung zu vergleichmäßigen.

Die innere Beheizung erfolgt vorzugsweise dadurch, daß der den elastischen Belag tragende Walzenkörper peripher verlaufende Heizmittelkanäle aufweist. Das Heizmittel, insbesondere auch Dampf, verläuft dicht neben der Oberfläche des Walzenkörpers, so daß die Wärme unmittelbar an den Belag weitergegeben werden kann.

Eine andere empfehlenswerte Art der Beheizung ergibt sich aus den Merkmalen des Anspruchs 5. Hier wird die Wärme unmittelbar im Oberflächenbereich des Belags aufgenommen und auf kürzestem Weg an die Papierbahn abgegeben.

Eine weitere günstige Alternative besteht darin, daß der elastische Belag Einlagerungen aus magnetisierbarem Material enthält und mittels einer Induktionsspule von außen beheizt wird. Hier wird die Wärme inmitten des Belages erzeugt und kann daher ebenfalls gut an die Papierbahn abgegeben werden.

In konstruktiver Hinsicht empfiehlt es sich, daß die beheizbare Walze, die den elastischen Belag trägt, zusammen mit einer zweiten beheizbaren Walze einen Walzenspalt bildet. Der Papierbahn wird daher von beiden Seiten her Wärmeenergie zugeführt, was für den Satinageprozeß sehr günstig ist. Man kann nämlich einen besseren Satinageerfolg oder den gleichen Satinageerfolg mit einer geringeren Walzenzahl erreichen.

Die erhöhte Zufuhr an Wärmeenergie macht es möglich, daß der gewünschte Satinageeffekt sogar erreicht wird, wenn nur ein einziger Walzenspalt vorhanden ist.

Dieser Erfolg wird dadurch unterstützt, daß der elastische Belag eine innere Schicht aus einem ersten Kunststoff und eine äußere Schicht aus einem zweiten Kunststoff aufweist und daß die äußere Schicht eine geringere Elastizität und eine größere Härte als der erste Kunststoff sowie eine glatte Oberfläche aufweist. Aufgrund der glatten Oberfläche der äußeren Kunststoffschicht und der glatten metallischen Oberfläche einer

Nachbarwalze sowie der Wärmezufuhr von beiden Seiten her ergibt sich ein veredeltes Papier, das beidseitig weitgehend gleiche Eigenschaften aufweist. Wegen weiterer Einzelheiten eines solchen Zwei-Walzen-Kalanders sei auf DE 195 06 301 A1 verwiesen.

Günstig ist es auch, daß die beheizbare, mit einem elastischen Belag versehene Walze mit einer Biegeeinstellwalze einen Walzenspalt bildet. Eine solche Biegeeinstellwalze erlaubt es, die Druckspannung im Walzenspalt sehr gleichmäßig zu halten. Sie braucht nicht unbedingt beheizt zu sein, weil ja Wärme über die andere Walze zugeführt werden kann.

Die Erfindung wird nachstehend anhand in der Zeichnung dargestellter bevorzugter Ausführungsbeispiele näher beschrieben. Es zeigen in schematischer Darstellung:
- Fig. 1: einen Kompaktkalander mit zwei Walzenpaaren,
- Fig. 2: einen Kompaktkalander mit nur einem Walzenpaar und
- Fig. 3: einen Fünf-Walzen-Kalander.

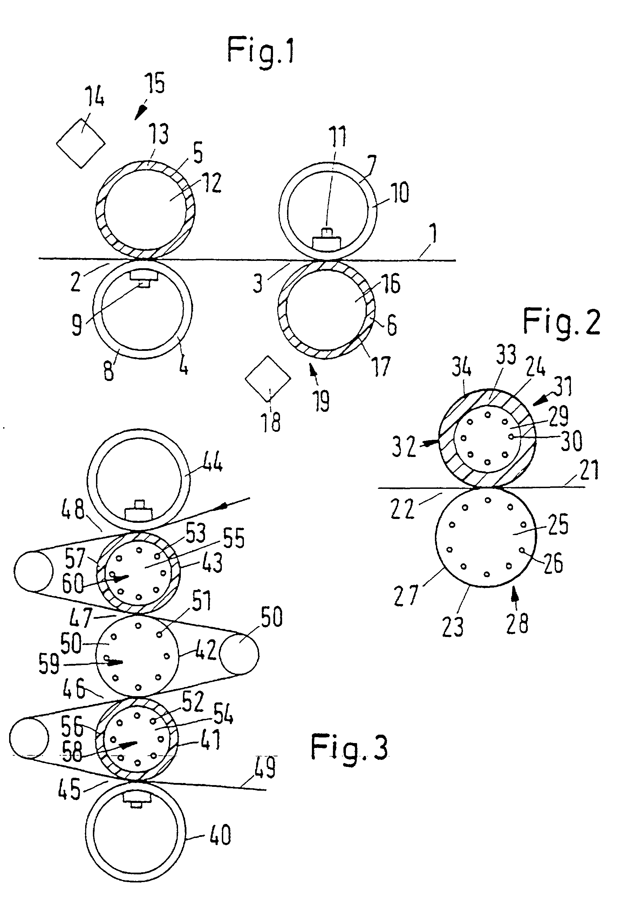

In Fig. 1 durchläuft eine Papierbahn 1 zwei Walzenspalte 2 und 3. Der Walzenspalt wird von Walzen 4 und 5, der Spalt 3 von Walzen 6 und 7 begrenzt. Die Walze 4 ist eine Biegeeinstellwalze, die einen Walzenmantel 8 aus Hartguß aufweist, der durch zonenweise ansteuerbare Stützelemente gegen die andere Walze 5 drückbar ist. Auch die Walze 7 ist eine Biegeeinstellwalze mit einem Walzenmantel 10 und Stützelementen 11.

Die Walze 5 besitzt einen zylindrischen Walzenkörper 12, der einen elastischen Belag 13 aus Kunststoff trägt. Dieser Kunststoff weist Einlagerungen aus dunklem, insbesondere schwarzem Material, beispielsweise Farbpigmente, auf. An der Außenseite ist ein IR-Strahler 14 vorgesehen, dessen Strahlung von den Einlagerungen absorbiert und als Wärme an die Papierbahn 1 abgegeben wird. Es handelt sich daher um eine äußere Heizvorrichtung 15. Die Walze 5 besitzt wiederum einen Walzenkörper 16 mit einem elastischen Belag 17. Dieser enthält Einlagerungen aus magnetisierbarem Material, insbesondere Metall, wie Eisen. Eine Induktionsspule 18 erzeugt in diesen magnetisierbaren Teilen Wärme, die dann an die Papierbahn 1 abgegeben wird. Auch hier gibt es demnach eine äußere Heizeinrichtung 19.

Im Spalt 2 wird die Unterseite der Papierbahn 1 unter gleichzeitiger Wärmezufuhr von oben geglättet, im Spalt 3 die Oberseite der Papierbahn 1 unter gleichzeitiger Wärmezufuhr von unten geglättet.

Bei der Ausführung nach Fig. 2 läuft die Papierbahn 21 durch einen Walzenspalt 22, der von den Walzen 23 und 24 begrenzt wird. Die Walze 23 weist einen Walzenkörper 25 auf, der eine Vielzahl von peripheren Axialkanälen 26 aufweist, die von einem Wärmeträger, wie Wasserdampf, durchströmt werden können. Die Walze 23 trägt einen außerordentlich dünnen elastischen Belag 27, der eine Dicke von 0,05 bis 2 mm, vorzugsweise 0,1 bis 1 mm hat. Wegen des geringen Abstandes der Kanäle 26 vom Umfang und wegen der geringen Dicke des Belages 27 tritt ein erheblicher Wärmefluß von der unteren Walze 25 auf die Papierbahn 21 auf. Hier wird demnach eine innere Heizvorrichtung 28 verwendet. Die Walze 24 besitzt einen Walzenkörper 29, der mit peripheren Axialkanälen 30 für den Durchfluß eines Wärmeträgers versehen ist, so daß sich wiederum eine innere Heizvorrichtung 31 ergibt. Der Walzenkörper 29 trägt einen elastischen Belag 32, der aus einer inneren Schicht 33 und einer äußeren Schicht 34 besteht. Die innere Schicht 33 weist einen Kunststoff auf, der Einlagerungen aus gut wärmeleitendem Material enthält. Die äußere Schicht 34 besteht aus einem zweiten Kunststoff, hat aber nur eine ähnlich geringe Dicke wie der Belag 27. Insgesamt erfolgt daher ein ausreichender Wärmefluß von den Kanälen 30 zur Papierbahn 21. Darüber hinaus hat die äußere Schicht 34 eine geringere Elastizität und eine größere Härte als der erste Kunststoff sowie eine glatte Oberfläche. Da auch dem Belag 27 eine ähnlich glatte Oberfläche gegeben werden kann, ergibt sich in vielen Fällen eine ausreichende Papierveredelung schon nach Durchlauf eines einzigen Spalts 22, wobei es eine wesentliche Rolle spielt, daß der Papierbahn 21 von beiden Seiten her Wärme zugeführt wird.

Bei der Ausführungsform nach Fig. 3 bildet ein Stapel aus fünf Walzen 40, 41, 42, 43 und 44 insgesamt vier Spalte 45, 46, 47 und 48, die von einer Papierbahn 49 nacheinander und unter Umlenkung durch Leitwalzen 50 durchlaufen werden. Die Unterwalze 40 und die Oberwalze 44 sind als Biegeeinstellwalzen ähnlich wie die Walzen 4 und 7 der Fig. 1 ausgelegt. Die Mittelwalze 42 ist eine harte Walze mit einem einheitlichen Walzenkörper 50, der eine Vielzahl von peripheren Axialkanälen 51 für den Durchfluß eines Wärmeträgers besitzt. Die Mittelwalzen 41 und 43 besitzen einen mit ähnlichen Kanälen 52 und 53 versehenen Walzenkörper 54 und 55. Sie tragen einen elastischen Belag 56 und 57, der durch Einlagerungen von gut wärmeleitendem Material dem Wärmefluß zur Papierbahn 49 nur wenig Widerstand entgegensetzt. Die drei Walzen 41, 42 und 43 besitzen daher jeweils eine innere Beheizung 58, 59 und 60.

Als Kunststoffe für den elastischen Belag kommen vielerlei Materialien in Betracht, beispielsweise Polyester-, Epoxid- oder Phenolharze, gegebenenfalls faserverstärkt, wobei Fasern mit guter Wärmeleitfähigkeit, wie Kohlestoffasern bevorzugt werden.

Die dargestellten Ausführungsformen dienen nur dem allgemeinen Verständnis. Die einzelnen Walzen können je nach gewünschter Papierqualität miteinander kombiniert oder ausgetauscht werden. Insbesondere kann ein Walzenstapel auch aus weniger oder mehr Walzen als der Fünf-Walzen-Kalander in Fig. 3 bestehen und insbesondere zwei bis zwölf Walzen aufweisen.

## Patentansprüche

1. Papierkalander mit wenigstens zwei Walzen, von denen eine einen elastischen Belag aus Kunststoff trägt und eine durch eine Heizvorrichtung beheizt ist und einen Wärmefluß an die Papierbahn bewirkt, **dadurch gekennzeichnet, daß** eine beheizte Walze (24; 41, 43) den elastischen Belag (32; 56, 57) trägt, die Heizvorrichtung (31; 58, 60) den elastischen Belag (32; 56, 57) von innen her beheizt und der Belag Einlagerungen aus gut wärmeleitendem Material enthält.

2. Papierkalander nach dem Oberbegriff des Anspruchs 1, **dadurch gekennzeichnet, daß** eine beheizte Walze (23) den elastischen Belag (27) trägt, die Heizvorrichtung (28) den elastischen Belag (27) von innen her beheizt und der elastische Belag (27) eine Dicke von 0,05 bis 2 mm hat.

3. Papierkalander nach Anspruch 2, **dadurch gekennzeichnet, daß** der elastische Belag (27) eine Dicke von 0,1 bis 1 mm hat.

4. Papierkalander nach einem der Ansprüche 1 bis 3, **dadurch gekennzeichnet, daß** der den elastischen Belag (27, 32; 56, 57) tragende Walzenkörper (25, 29; 54, 55) peripher verlaufende Heizmittelkanäle (26, 30; 52, 53) aufweist.

5. Papierkalander nach dem Oberbegriff des Anspruchs 1, **dadurch gekennzeichnet, daß** eine beheizte Walze (5, 6) den elastischen Belag (13) trägt, der elastische Belag (13) Einlagerungen aus dunklem Material enthält und durch IR-Strahlung (14) von außen her beheizt wird.

6. Papierkalander nach dem Oberbegriff des Anspruchs 1, **dadurch gekennzeichnet, daß** eine beheizte Walze (5, 6) den elastischen Belag (17) trägt, der elastische Belag (17) Einlagerungen aus magnetisierbarem Material enthält und mittels einer Induktionsspule (18) von außen beheizt wird.

7. Papierkalander nach einem der Ansprüche 1 bis 6, **dadurch gekennzeichnet, daß** die beheizbare Walze (23, 24; 41, 42), die den elastischen Belag (27, 32; 56, 57) trägt, zusammen mit einer zweiten beheizbaren Walze (27, 32; 42) einen Walzenspalt (22; 46, 47) bildet.

8. Papierkalander nach einem der Ansprüche 1 bis 7, **dadurch gekennzeichnet, daß** nur ein einziger Walzenspalt (22) vorhanden ist.

9. Papierkalander nach Anspruch 8, **dadurch gekennzeichnet, daß** der elastische Belag (32) eine innere Schicht (33) aus einem ersten Kunststoff und eine äußere Schicht (34) aus einem zweiten Kunststoff aufweist und daß die äußere Schicht eine geringere Elastizität und eine größere Härte als der erste Kunststoff sowie eine glatte Oberfläche aufweist.

10. Papierkalander nach einem der Ansprüche 1 bis 9, **dadurch gekennzeichnet, daß** die beheizbare, mit einem elastischen Belag (13, 17; 56, 57) versehene Walze (5, 6; 41, 43) mit einer Biegeeinstellwalze (4, 7; 40, 44) einen Walzenspalt (2, 3; 45, 48) bildet.

## Claims

1. Paper calender having at least two rolls, of which one bears a resilient covering of plastic and one is heated by a heating apparatus and effects a flow of heat to the paper web, **characterized in that** a heated roll (24; 41, 43) bears the resilient covering (32; 56, 57), the heating apparatus (31; 58, 60) heats the resilient covering (32; 56, 57) from inside, and the covering contains inlays of highly thermally conductive material.

2. Paper calender according to the precharacterizing clause of Claim 1, **characterized in that** one heated roll (23) bears the resilient covering (27), the heating apparatus (28) heats the resilient covering (27) from inside, and the resilient covering (27) has a thickness of 0.05 to 2 mm.

3. Paper calender according to Claim 2, **characterized in that** the resilient covering (27) has a thickness of 0.1 to 1 mm.

4. Paper calender according to one of Claims 1 to 3, **characterized in that** the roll body (25, 29; 54, 55) that bears the resilient covering (27, 32; 56, 57) has heating medium ducts (26, 30; 52, 53) which run peripherally.

5. Paper calender according to the precharacterizing clause of Claim 1, **characterized in that** one heated roll (5, 6) bears the resilient covering (13), the resilient covering (13) contains inlays of dark material and is heated from outside by IR radiation (14).

6. Paper calender according to the precharacterizing clause of Claim 1, **characterized in that** one heated roll (5, 6) bears the resilient covering (17), the resilient covering (17) contains inlays of magnetizable material and is heated from outside by means of an induction coil (18).

7. Paper calender according to one of Claims 1 to 6, **characterized in that** the heatable roll (23, 24; 41, 42) which bears the resilient covering (27, 32; 56, 57) forms a nip (22; 46, 47) together with a second heatable roll (27, 32; 42).

8. Paper calender according to one of Claims 1 to 7, **characterized in that** there is only a single nip (22).

9. Paper calender according to Claim 8, **characterized in that** the resilient covering (32) has an inner layer (33) of a first plastic and an outer layer (34) of a second plastic, and **in that** the outer layer has a lower resilience and a higher hardness than the first plastic, and also a smooth surface.

10. Paper calender according to one of Claims 1 to 9, **characterized in that** the heatable roll (5, 6; 41, 43) provided with an elastic covering (13, 17; 56, 57) forms a nip (2, 3; 45, 48) with a controlled deflection roll (4, 7; 40, 44).

## Revendications

1. Calandre pour papier avec au moins deux cylindres, dont l'un porte un revêtement élastique en matière plastique et dont l'un est chauffé par un dispositif de chauffage et provoque un flux de chaleur vers la bande de papier, **caractérisée en ce qu'**un cylindre chauffé (24; 41, 43) porte le revêtement élastique (32; 56, 57), le dispositif de chauffage (31; 58, 60) chauffe le revêtement élastique (32; 56, 57) par l'intérieur et le revêtement contient des inclusions en une matière bonne conductrice de la chaleur.

2. Calandre pour papier suivant le préambule de la revendication 1, **caractérisée en ce qu'**un cylindre chauffé (23) porte le revêtement élastique (27), le dispositif de chauffage (28) chauffe le revêtement élastique (27) par l'intérieur et le revêtement élastique (27) a une épaisseur de 0,05 à 2 mm.

3. Calandre pour papier suivant la revendication 2, **caractérisée en ce que** le revêtement élastique (27) a une épaisseur de 0,1 à 1 mm.

4. Calandre pour papier suivant l'une quelconque des revendications 1 à 3, **caractérisée en ce que** le corps de cylindre (25, 29; 54, 55) portant le revêtement élastique (27, 32; 56, 57) présente des canaux d'agent de chauffage (26, 30; 52, 53) disposés en périphérie.

5. Calandre pour papier suivant le préambule de la revendication 1, **caractérisée en ce qu'**un cylindre chauffé (5, 6) porte le revêtement élastique (13), le revêtement élastique (13) contient des inclusions en une matière sombre et est chauffé de l'extérieur par un émetteur infrarouge (14).

6. Calandre pour papier suivant le préambule de la revendication 1, **caractérisée en ce qu'**un cylindre chauffé (5, 6) porte le revêtement élastique (17), le revêtement élastique (17) contient des inclusions en une matière magnétisable et est chauffé de l'extérieur au moyen d'une bobine d'induction (18).

7. Calandre pour papier suivant l'une quelconque des revendications 1 à 6, **caractérisée en ce que** le cylindre chauffant (23, 24; 41, 42), qui porte le revêtement élastique (27, 32; 56, 57), forme une emprise de cylindres (22; 46, 47) avec un second cylindre chauffant (27, 32; 42).

8. Calandre pour papier suivant l'une quelconque des revendications 1 à 7, **caractérisée en ce qu'**il n'y a qu'une seule emprise de cylindres (22).

9. Calandre pour papier suivant la revendication 8, **caractérisée en ce que** le revêtement élastique (32) présente une couche interne (33) en une première matière plastique et une couche externe (34) en une seconde matière plastique et **en ce que** la couche externe présente une élasticité plus faible et une dureté plus élevée que la première matière plastique ainsi qu'une surface lisse.

10. Calandre pour papier suivant l'une quelconque des revendications 1 à 9, **caractérisée en ce que** le cylindre chauffant (5, 6; 41, 43) pourvu d'un revêtement élastique (13, 17; 56, 57) forme une emprise de cylindres (2, 3; 45, 48) avec un cylindre à courbure réglable (4, 7; 40, 44).
